# EUROPÄISCHE PATENTSCHRIFT

(11) **EP 3 869 093 B1**
(45) Veröffentlichungstag und Bekanntmachung des Hinweises auf die Patenterteilung: **05.07.2023**
(21) Anmeldenummer: 21155894.5
(22) Anmeldetag: 09.02.2021
(51) Int. Cl.: F21V 7/00, F21V 23/04

(54) **FLÄCHENLEUCHTE MIT DIREKTER UND INDIREKTER LICHTABGABE**
FLAT LIGHT WITH DIRECT AND INDIRECT LIGHT EMISSION
LUMINAIRE À LUMIÈRE À ÉMISSION LUMINEUSE DIRECTE ET INDIRECTE

(30) Priorität: 18.02.2020 DE 202020100855 U
(43) Veröffentlichungstag der Anmeldung: 25.08.2021
(73) Patentinhaber: Zumtobel Lighting GmbH, 6850 Dornbirn (AT)
(72) Erfinder: Schwaighofer, Andreas, 6850 Dornbirn (AT)
(74) Vertreter: Thun, Clemens

(56) Entgegenhaltungen:
- EP-A1- 3 531 404
- WO-A1-2009/112277
- DE-U1-202012 013 172
- US-A1- 2011 205 727
- US-A1- 2014 078 777
- US-B1- 6 945 668

## Beschreibung

Die vorliegende Erfindung betrifft eine Leuchte gemäß dem Oberbegriff des Anspruchs 1, welche als Flächenleuchte ausgeführt ist und hierzu ein plattenförmiges Lichtleitelement aufweist, in welches seitlich Licht eingekoppelt wird. Das Lichtleitelement dient dazu, das seitlich eingekoppelte Licht gleichmäßig zu verteilen und über eine im Wesentlichen senkrecht zu der Lichteinkoppelseite ausgerichtete Flachseite abzugeben.

Flächenleuchten der oben beschriebenen Art sind in der Beleuchtungstechnologie vielfach bekannt. Der wesentliche Vorteil von Flächenleuchten besteht darin, dass Licht über eine verhältnismäßig große Fläche abgegeben wird, was ermöglicht, trotz verhältnismäßig niedriger Leuchtdichten insgesamt eine hohe Lichtmenge abzugeben, um einen Raum oder einen unterhalb einer Leuchte befindlichen Bereich effizient zu beleuchten. Die verhältnismäßig niedrige Leuchtdichte erlaubt hierbei, Blendeffekte für Beobachter zu vermeiden, sodass insgesamt ein angenehmes Beleuchtungsszenario erzielt wird.

Aus dem Stand der Technik sind verschiedene Möglichkeiten bekannt, derartige Flächenleuchten zu realisieren. Während in der Vergangenheit oftmals die Leuchtmittel (beispielsweise Leuchtstofflampen oder LEDs) flächig verteilt in einem Leuchtengehäuse angeordnet wurden und deren Licht über ein den Leuchtmitteln vorgeordnetes Lichtabstrahlelement der Leuchte abgegeben wurde, haben sich zwischenzeitlich Leuchten durchgesetzt, welche plattenförmige Lichtleitelemente verwenden. Der Vorteil dieser Lichtleiter-Technologie besteht darin, dass die Leuchtmittel seitlich des Lichtleitelements angeordnet werden können und trotz allem das Licht mit Hilfe des Lichtleitelements gleichförmig durchmischt und homogen flächig abgegeben wird. Bei den früheren Lösungen hingegen war erforderlich, die Leuchtmittel in einem gewissen Mindestabstand von dem Lichtabstrahlelement der Leuchte anzuordnen, um eine homogene Lichtabgabe erzielen zu können, weshalb die Lichtleiter-Technologie es ermöglicht, Flächenleuchten mit einer verhältnismäßig geringen Bauhöhe zu realisieren.

Aus dem Stand der Technik bekannte derartige Flächenleuchten mit Hilfe eines Lichtleitelements sind oftmals derart ausgeführt, dass Licht zur Unterseite hin in Form einer Direktbeleuchtung als auch zumindest teilweise in entgegengesetzter Richtung für eine indirekte Lichtabgabe abgegeben wird. Eine derartige zusätzliche indirekte Lichtabgabe ist beispielsweise dann erwünscht, wenn die Leuchte unterhalb der Decke eines Raums bzw. in der Nähe der Decke montiert wird, sodass der entsprechende Bereich der Decke zumindest geringfügig aufgehellt wird. Eine derartige kombinierte direkte und indirekte Lichtabgabe kann dann beispielsweise dadurch realisiert werden, dass das Licht seitlich in den flächigen Lichtleiter eingekoppelt wird und dieser derart ausgestaltet ist, dass ein Großteil des Lichts für die gewünschte direkte Lichtabgabe zur Unterseite hin ausgekoppelt wird, zumindest jedoch auch ein geringfügiger Anteil des Lichts das Lichtleitelement zur Oberseite hin verlassen kann. Auf diesem Wege kann in einfacher und eleganter Weise das Licht der Leuchtmittel sowohl für die direkte als auch für die indirekte Lichtabgabe genutzt werden.

Die DE 20 2012 013 172 U1 beschreibt eine Flächenleuchte mit einer lichtleitenden Platte, die eine erste, eine dieser gegenüberliegende zweite Flachseite und einen Rand in Form einer schmalen Stirnfläche hat, über die zeilenförmig angeordnete LEDs Licht einstrahlen, das die lichtleitende Platte diffus in Richtung der ersten Flachseite streut, wobei die lichtleitende Platte derart ausgebildet ist, dass sie nur einen ersten Teil des eingestrahlten Lichts in Richtung der ersten Flachseite streut und einen zweiten Teil des eingestrahlten Lichts in Richtung der zweiten Flachseite streut.

Die US 2014/0078777 A1 betrifft ein Beleuchtungsmodul, bestehend aus einer ersten Lichtquelle und einer zweiten Lichtquelle, wobei zwischen den beiden Lichtquellen ein erster und ein zweiter Lichtleiter angeordnet sind. Zwischen dem ersten und dem zweiten Lichtleiter ist eine reflektierende Schicht angeordnet. Das Licht der ersten Lichtquelle wird in das erste Lichtleitelement eingekoppelt und über die der reflektierenden Schicht gegenüberliegenden Flachseite des ersten Lichtleitelements abgegeben. Das Licht der zweiten Lichtquelle wird in das zweite Lichtleitelement eingekoppelt und über die der reflektierenden Schicht gegenüberliegenden Flachseite des zweiten Lichtleitelements abgegeben.

Ausgehend von diesem Stand der Technik liegt der vorliegenden Erfindung die Aufgabenstellung zugrunde, eine Flächenleuchte anzugeben, bei der flexiblere Möglichkeiten zur Gestaltung der direkten und indirekten Lichtabgabe bestehen.

Die Aufgabenstellung wird durch eine Leuchte, welche die Merkmale des Anspruchs 1 aufweist, gelöst. Vorteilhafte Weiterbildungen der Erfindungen sind Gegenstand der abhängigen Ansprüche.

Auch bei der Leuchte gemäß der vorliegenden Erfindung sind Leuchtmittel entlang einer Lichteinkoppelseite eines Lichtleitelements angeordnet und auf diese hin ausgerichtet. Gemäß der vorliegenden Erfindung ist nunmehr vorgesehen, dass die Leuchtmittel eine erste und eine zweite Leuchtmittelgruppe umfassen, wobei das Licht der ersten Leuchtmittelgruppe in das Lichtleitelement eingekoppelt und durch dieses in Lichtabstrahlrichtung der Leuchte abgegeben wird. Das Licht der zweiten Leuchtmittelgruppe hingegen wird mittels optischer Elemente in eine Richtung entgegengesetzt zur Lichtabstrahlrichtung der Leuchte umgelenkt und abgegeben. Das Lichtleitelement weist an seiner Lichteinkoppelseite den Leuchtmitteln der ersten Leuchtmittelgruppe zugeordnete Lichteinkoppelstrukturen auf, wobei die Lichteinkoppelstrukturen durch seitlich vorstehende, linsenartige Vorsprünge gebildet sind und die Leuchtmittel der beiden Gruppen alternierend oder alternierend in Teilgruppen entlang der Lichteinkoppelseite des Lichtleitelements angeordnet sind, wobei eine Teilgruppe vorzugsweise jeweils zwei Einzelleuchtmittel umfasst, und beide Leuchtmittelgruppen auf einem gemeinsamen Träger, insbesondere auf einer gemeinsamen Platine angeordnet sind. Dementsprechend werden die zur Verfügung stehenden Leuchtmittel in unterschiedlicher Weise genutzt, um die gewünschte direkte Lichtabgabe und indirekte Lichtabgabe zu ermöglichen. Diese Trennung eröffnet dann idealerweise die Möglichkeit, beide Lichtanteile (Direktbeleuchtung und Indirektbeleuchtung) getrennt voneinander anzusteuern und gegebenenfalls entsprechend vorteilhafter Weiterbildungen der Erfindung auch individuell die Farbe oder Farbtemperatur einstellen zu können.

Gemäß der vorliegenden Erfindung wird also eine Leuchte vorgeschlagen, welche aufweist:
- ein plattenförmiges Lichtleitelement, welches dazu ausgebildet ist, Licht, welches über eine Seite des Lichtleitelements in dieses eingekoppelt wird, über eine im Wesentlichen senkrecht zu der Lichteinkoppelseite ausgerichtete Flachseite in einer Lichtabstrahlrichtung der Leuchte abzugeben,
- Leuchtmittel, die entlang der Lichteinkoppelseite des Lichtleitelements angeordnet und auf diese ausgerichtet sind,
wobei die Leuchtmittel eine erste und eine zweite Leuchtmittelgruppe umfassen, wobei das Licht der ersten Leuchtmittelgruppe in das Lichtleitelement eingekoppelt und durch dieses in Lichtabstrahlrichtung abgegeben wird, und wobei das Licht der zweiten Leuchtmittelgruppe mittels optischer Elemente in eine Richtung entgegengesetzt zur Lichtabstrahlrichtung der Leuchte umgelenkt und abgegeben wird und das Lichtleitelement an seiner Lichteinkoppelseite den Leuchtmitteln der ersten Leuchtmittelgruppe zugeordnete Lichteinkoppelstrukturen aufweist, wobei die Lichteinkoppelstrukturen durch seitlich vorstehende, linsenartige Vorsprünge gebildet sind und die Leuchtmittel der beiden Gruppen alternierend oder alternierend in Teilgruppen entlang der Lichteinkoppelseite des Lichtleitelements angeordnet sind, wobei beide Leuchtmittelgruppen auf einem gemeinsamen Träger, insbesondere auf einer gemeinsamen Platine angeordnet sind.

Gemäß der vorliegenden Erfindung wird also das für die indirekte Lichtabgabe genutzte Licht nicht mehr in das Lichtleitelement eingekoppelt, sondern stattdessen auf getrenntem Wege nach oben bzw. in eine Richtung entgegengesetzt zur Lichtabstrahlrichtung der Leuchte abgegeben. Hierdurch kann die indirekte Lichtabgabe besser kontrolliert und gegebenenfalls angepasst werden. Nach wie vor wird allerdings eine kompakte Bauweise mit einer insbesondere sehr geringen Höhe erhalten, da trotz allem alle Leuchtmittel entlang der Lichteinkoppelseite des Lichtleitelements angeordnet sind.

Vorzugsweise ist wie bereits erwähnt vorgesehen, dass die direkte Lichtabgabe und die indirekte Lichtabgabe getrennt bzw. unabhängig voneinander eingestellt werden können. Dementsprechend ist vorgesehen, dass beide Leuchtmittelgruppen unabhängig voneinander ansteuerbar sind.

Um einerseits die Einkopplung des Lichts der ersten Leuchtmittelgruppe zu optimieren, andererseits die Umlenkung des Lichts der zweiten Leuchtmittelgruppe zu ermöglichen, ist erfindungsgemäß vorgesehen, dass das Lichtleitelement an seiner Lichteinkoppelseite den Leuchtmitteln der ersten Leuchtmittelgruppe zugeordnete Lichteinkoppelstrukturen aufweist. Es handelt sich hierbei um seitlich vorstehende, linsenartige Vorsprünge, die den entsprechenden Leuchtmitteln der ersten Leuchtmittelgruppe zugeordnet sind. Diese Lichteinkoppelstrukturen tragen insbesondere auch dazu bei, die Lichteinkopplung zu optimieren und eine Vergleichmäßigung des Lichts zu erhalten, was im Hinblick auf die angestrebte homogene Lichtabgabe insbesondere für die Direktbeleuchtung von Vorteil ist.

Die Leuchtmittel der beiden Gruppen sind dabei erfindungsgemäß insbesondere alternierend oder alternierend in Teilgruppen entlang der Lichteinkoppelseite des Lichtleitelements angeordnet, wobei eine Teilgruppe vorzugsweise jeweils zwei Einzelleuchtmittel umfasst. Kommen dabei die oben erwähnten Lichteinkoppelstrukturen zum Einsatz, so ergeben sich hierbei Zwischenräume zwischen diesen Strukturen, wobei in diesen Zwischenräumen zwischen zwei aufeinander folgenden Lichteinkoppelstrukturen Reflektoren oder vergleichbare optische Elemente angeordnet sein können, welche das Licht der zweiten Leuchtmittelgruppe in die Richtung entgegengesetzt zur Lichtabstrahlrichtung der Leuchte umlenken. Diese Reflektoren können dabei insbesondere derart ausgeführt sein, dass sie in einer der Lichtabstrahlrichtung entgegengesetzten Richtung geöffnet sind, wobei vorzugsweise eine lichtdurchlässige Abdeckung vorgesehen, ist, welche die der Lichtabstrahlseite gegenüberliegende Rückseite des Lichtleitelements sowie die Reflektoren überdeckt. Diese Abdeckung dient dabei insbesondere dem Schutz der zweiten Leuchtmittelgruppe, da diese Leuchtmittel andernfalls frei zugänglich wären und dementsprechend die Gefahr bestünde, dass diese beispielsweise bei der Montage der Leuchte oder bei Reinigungs- oder Wartungsarbeiten versehentlich berührt werden.

Vorzugsweise ist vorgesehen, dass die oben erwähnten Reflektoren zu einem gemeinsamen Reflektorteil zusammengefügt sind, welches an der Lichteinkoppelseite des Lichtleitelements angeordnet ist. Hierdurch ergibt sich eine verhältnismäßig einfache Gestaltung der Leuchte mit wenig Einzelbauteilen. Hierbei kann insbesondere vorgesehen sein, dass das Reflektorteil zusätzlich auch eine Halterung für beide Leuchtmittelgruppen bildet, sodass dieses Bauteil vielfache Funktionen übernimmt.

Erfindungsgemäß sind beide Leuchtmittelgruppen auf einem gemeinsamen Träger, insbesondere auf einer gemeinsamen Platine angeordnet. Auch diese Maßnahme trägt dazu bei, dass der Aufbau der Leuchte insgesamt vereinfacht wird, trotz allem jedoch flexible Möglichkeiten zur Einstellung der Lichtabgabe bestehen.

Die Leuchte kann gemäß einer vorteilhaften Weiterbildung einen umlaufenden Rahmen aufweisen, der eine Lichtabstrahlöffnung der Leuchte begrenzt. Üblicherweise ist hierbei gewünscht, dass der Rahmen verhältnismäßig schmal bemessen ist bzw. nahezu die gesamte Fläche der Leuchte für die Lichtabgabe genutzt wird. Da andererseits vermieden werden soll, dass die Leuchtmittel bei Beobachtung von unten als einzelne helle Punkte erkennbar sind, kann vorzugsweise vorgesehen sein, dass ein Kaschierelement vorgesehen ist, welches im Randbereich des Lichtleitelements angeordnet ist und sich in Abstrahlrichtung nach außen divergierend zu der Lichtabstrahlöffnung der Leuchte hin erstreckt. Einerseits wird hierdurch die Unterseite desjenigen Bereichs, in dem die Leuchtmittel angeordnet sind, kaschiert, sodass diese nicht erkennbar sind. Andererseits erlaubt die divergierende Ausgestaltung dieses Kaschierelements, dass trotz allem über eine möglichst große Fläche der Leuchte Licht abgegeben wird. Dabei kann das Kaschierelement insbesondere Bestandteil des oben erwähnten Reflektorteils sein.

Zumindest eine Leuchtmittelgruppe kann gemäß der vorliegenden Erfindung Leuchtmittel umfassen, welche Licht unterschiedlicher Farbe oder Farbtemperatur abgeben. In diesem Fall ist dann vorzugsweise vorgesehen, dass diese unterschiedlichen Leuchtmittel getrennt ansteuerbar sind, was die Möglichkeit eröffnet, den entsprechenden Anteil des Lichts, also den Direktanteil und/oder den Indirektanteil hinsichtlich seiner Helligkeit, seiner Farbe und/oder Farbtemperatur einzustellen.

Letztendlich erlauben es die erfindungsgemäßen Maßnahmen, eine Leuchte mit einer äußerst geringen Bauhöhe zu realisieren, welche einerseits homogen Licht für eine direkte Lichtabgabe flächig abgibt und andererseits eine indirekte Lichtabgabe ermöglicht, wobei vielfältige Möglichkeiten hinsichtlich der Ansteuerung der entsprechenden Lichtabgaben bestehen.

Nachfolgend soll die Erfindung anhand der beiliegenden Zeichnung näher erläutert werden. Es zeigen:

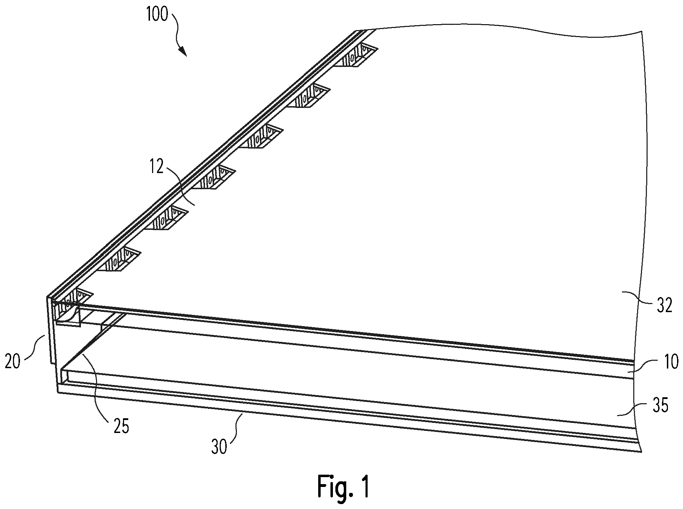

- Figur 1: eine perspektivische Ansicht einer erfindungsgemäßen Leuchte im Schnitt;
- Figuren 2a und 2b: Darstellungen des Bereichs der Lichteinkopplung der erfindungsgemäßen Leuchte;
- Figur 3: eine Schnittdarstellung des Randbereichs der erfindungsgemäßen Leuchte;
- Figur 4: eine Ansicht der Ober- beziehungsweise Rückseite der Leuchte; und
- Figur 5: eine Darstellung der mithilfe der erfindungsgemäßen Leuchte erzielbaren Lichtverteilung.

Die Figuren zeigen die für die Lichterzeugung und Lichtabgabe wesentlichen Komponenten der allgemein mit dem Bezugszeichen 100 versehenen Leuchte. Weitere Komponenten, die beispielsweise der Aufhängung oder Montage der Leuchte 100 sowie der Stromversorgung der Leuchtmittel dienen, werden aus Gründen der Übersichtlichkeit nicht dargestellt.

Gezeigt ist im vorliegenden Fall eine rechteckig ausgeführte Leuchte, wobei die Leuchte selbstverständlich auch andere Formen annehmen kann. Zu denken wäre hierbei insbesondere an eine quadratische Form beziehungsweise generell an eine polygonale Form. Auch ovale, insbesondere kreisförmige Leuchten wären gemäß der vorliegenden Erfindung realisierbar.

Zentrales Bauteil der Leuchte 100 ist wie bereits erwähnt ein mit dem Bezugszeichen 10 versehenes flächiges Lichtleitelement. In bekannter Weise dient dieses dazu, seitlich in das Lichtleitelement 10 eingekoppeltes Licht mithilfe von Mehrfachreflexionen zunächst möglichst gleichmäßig über die gesamte Breite des Lichtleitelements 10 hinweg zu verteilen und dann über eine Flachseite, im vorliegenden Fall über die Unterseite 11, das Licht möglichst homogen abzugeben. Das Lichtleitelement 10 stellt hierbei nicht unmittelbar das eigentliche Lichtabstrahlelement der Leuchte 100 dar. Stattdessen ist in einem geringfügigen Abstand vor der Lichtaustrittsfläche 11 des Lichtleitelements 10 eine lichtdurchlässige Abdeckung 30 der Leuchte 100 angeordnet. Diese dient gleichzeitig auch als Schutz für die im Inneren der Leuchte 100 angeordneten Komponenten und kann darüber hinaus auch noch mit optischen Strukturen oder vergleichbaren Maßnahmen versehen sein, um die Lichtabstrahleigenschaften der Leuchte 100 in gewünschter Weise anzupassen. Im vorliegenden Fall dient die Abdeckung 30 insbesondere auch als Auflage für ein optisches Element 35, welches beispielsweise eine entsprechende Filter- oder eine Streuscheibe sein kann, mit deren Hilfe nochmals zusätzlich die Lichtabgabe in gewünschter Weise angepasst werden kann.

Die für die Lichterzeugung verantwortlichen Komponenten sind im Randbereich des Lichtleitelements 10 angeordnet, wobei in den Figuren ein einzelner Randbereich gezeigt ist. Abhängig von der Form und den Abmessungen der Leuchte 100 können die Leuchtmittel am gesamten Außenumfang des Lichtleitelements 10 vorgesehen sein oder auch lediglich an zwei einander gegenüberliegenden Seiten. Im Falle äußerst kompakter beziehungsweise schmaler Lichtleitelemente wäre grundsätzlich auch die Lichteinkopplung lediglich an einer einzigen Seite denkbar.

Als Leuchtmittel werden hierbei LEDs 31 verwendet, die auf einer länglichen LED-Platine 30 an der für den Lichteintritt vorgesehenen Seite 12 des Lichtleitelements angeordnet sind. Wie nachfolgend erläutert, bilden die LEDs 31 zwei verschiedene Gruppen, deren Licht in unterschiedlicher Weise für die Lichtabgabe genutzt werden soll. Trotz allem ist vorzugsweise vorgesehen, dass alle LEDs 31 auf einer oder mehreren Platinen gemeinsam angeordnet sind, wobei die Anordnung der Platine(n) 30 und damit die Ausrichtung der LEDs 31 derart ist, dass diese - unabhängig davon, zu welcher Gruppe sie gehören - auf den Randbereich 12 des Lichtleitelements 10 hin ausgerichtet sind.

Die Aufteilung der LEDs 31 in zwei Gruppen dient dazu, einen ersten Teil der LEDs 31 für die über das Lichtleitelement 10 vorgesehene direkte Lichtabgabe zu nutzen und mithilfe der zweiten LED-Gruppe eine indirekte Lichtabgabe zu erzielen. Die indirekte Lichtabgabe soll hierbei unabhängig von der direkten Lichtabgabe erfolgen, sodass also nicht gewünscht bzw. vorgesehen ist, dass das Licht dieser zweiten LED-Gruppe in das Lichtleitelement 10 eingekoppelt wird.

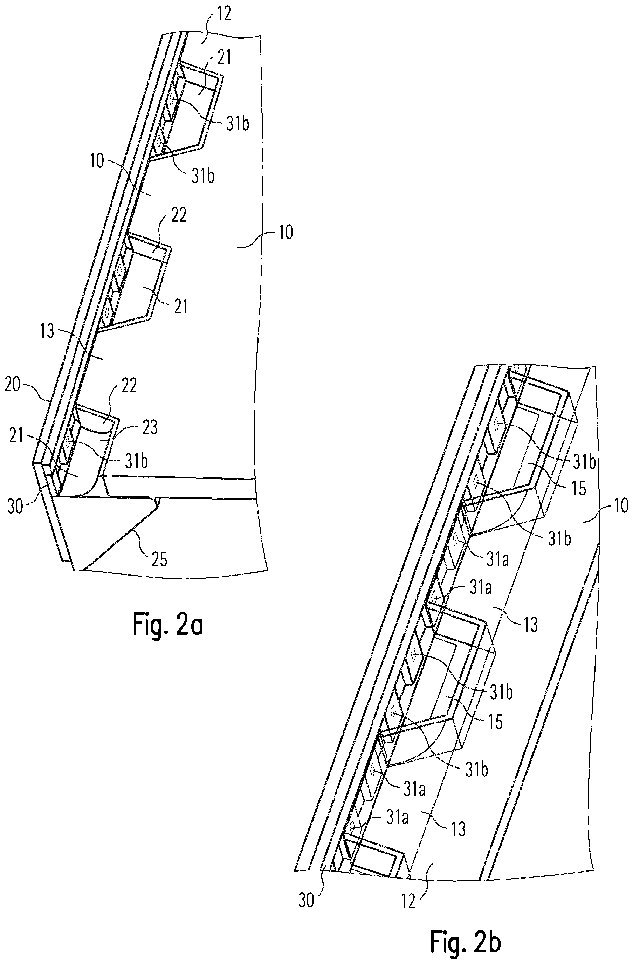

Dementsprechend sind im Randbereich bzw. auf der Lichteinkoppelseite 12 des Lichtleitelements 10 seitlich vorstehende Lichteinkoppelstrukturen 13 ausgebildet, welche den LEDs der ersten Gruppe 31a (s. insbesondere Figur 2b) zugeordnet sind. Diese Lichteinkoppelstrukturen 13 liegen in Form von seitlich vorstehenden, etwa trapezartig ausgeführten Linsenstrukturen vor, die sich in Richtung auf die zugehörigen LEDs 31a hin leicht verjüngen. Ggf. können diese Lichteinkoppelstrukturen 13 im Randbereich auch kleine Ausnehmungen aufweisen, in welche die zugehörigen LEDs 31a hineinragen. Von diesen LEDs 31a in die Lichteinkoppelstrukturen 13 eingestrahltes Licht kann dann in das Lichtleitelement 10 eintreten, wobei es ggf. an den Seitenflächen der Lichteinkoppelstrukturen 13 total reflektiert wird. Dies gilt insbesondere für unter flachen Winkeln abgegebene Lichtstrahlen, die dennoch auf diesem Wege mittels entsprechender Reflexionen in das Lichtleitelement 10 eingekoppelt werden, wobei hierdurch auch eine gewisse Entblendung des letztendlich abgegebenen Lichts in Längsrichtung der Lichteintrittsseite 12 erzielt wird. Gleichzeitig ist sichergestellt, dass nahezu das gesamte Licht der LEDs der ersten Gruppe 31a für die direkte Lichtabgabe genutzt werden kann.

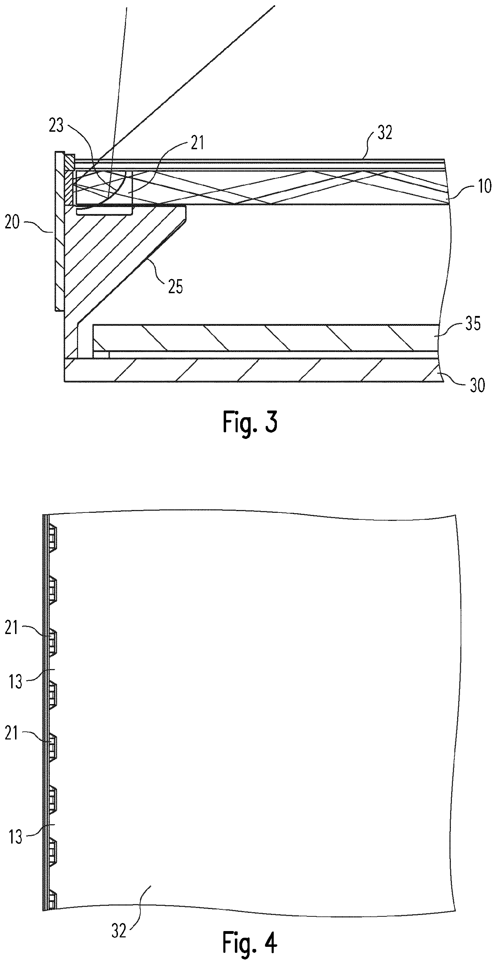

Die LEDs der ersten Gruppe 31a sowie der zweiten Gruppe 31b sind insbesondere alternierend bzw. alternierend in Gruppen entlang der LED-Platine 30 angeordnet, sodass zwischen den zinnenartig nach außen vorstehenden Lichteinkoppelstrukturen 13 - wiederum trapezartige - Freiräume verbleiben. Diese Freiräume 15 sind den LEDs der zweiten Gruppe 31b zugeordnet, wobei nunmehr in diesen Freiräumen 15 reflektierende Einsätze 21 angeordnet sind. Diese reflektierenden Einsätze 21, welche vorzugsweise die Freiräume 15 vollständig ausfüllen, weisen einerseits den Randflächen der Lichteinkoppelstrukturen entsprechende Seitenwände 22 auf, insbesondere jedoch eine konkav gekrümmte Reflexionsfläche 23, welche entsprechend der Darstellung in Figur 3 auftreffende Lichtstrahlen nach oben lenkt. Das Licht der LEDs der zweiten Gruppe 31b wird somit durch diese Reflektoreinsätze 21 derart umgelenkt, dass es nicht in das Lichtleitelement 10 eintritt, sondern stattdessen nach oben für eine Indirektbeleuchtung abgegeben wird.

Da die Reflektoreinsätze 21 zur Ober- bzw. Rückseite hin offen sind und sie dementsprechend im Gegensatz zu den Lichteinkoppelstrukturen 13 keinen Schutz für die LEDs 31b der zweiten Gruppe bilden, ist vorzugsweise an der der Lichtabstrahlfläche 11 gegenüberliegenden Rückseite des Lichtleitelements 10 eine weitere, lichtdurchlässige Abdeckung 32 vorgesehen, welche das durch die Reflektoreinsätze 21 nach oben umgelenkte Licht ungehindert durchlässt, allerdings einen entsprechenden Schutz für die gesamte Anordnung bildet.

Wie insbesondere den Darstellungen der Figuren 2a und 2b entnommen werden kann, ist vorgesehen, dass jeder Lichteinkoppelstruktur 13 sowie jedem Reflektoreinsatz 21 jeweils zwei LEDs der entsprechenden Gruppe 31a bzw. 31b zugeordnet sind. Diese alternierende Anordnung in Teilgruppen stellt insofern eine vorteilhafte Variante dar, als in diesem Fall die Lichteinkoppelstrukturen 13 sowie die Reflektoreinsätze 21 nicht zu klein gestaltet werden müssten, was der Fall wäre, wenn jeweils lediglich Einzel-LEDs alternierend den beiden Gruppen 31a bzw. 31b zugeordnet werden würden. Andererseits ist der Abstand aufeinanderfolgender LEDs der gleichen Gruppe 31a bzw. 31bimmer noch derart gering, dass insbesondere für das über das Lichtleitelement 10 abgegebene Licht gewährleistet ist, dass dieses auch im Randbereich bereits homogen und gleichmäßig aus dem Lichtleitelement 10 ausgekoppelt wird. Dies wäre ggf. im Falle größerer Teilgruppen nicht mehr gewährleistet.

Ein weiterer Vorteil, die Teilgruppen durch mehrere LEDs einer Gruppe 31a bzw. 31b zu bilden, besteht darin, dass grundsätzlich auch die Möglichkeit bestehen würde, für eine Teilgruppe LEDs unterschiedlicher Art zu verwenden, die also beispielsweise Licht mit einer unterschiedlichen Farbe oder Farbtemperatur abgeben. Besteht die Möglichkeit, diese LEDs dann individuell anzusteuern, so werden - wie nachfolgend noch näher erläutert - die Möglichkeiten zur Beeinflussung der Lichtabgabe nochmals weiter verbessert.

Vorzugsweise ist vorgesehen, dass die Reflektoreinsätze 21 keine Einzelbauteile darstellen, sondern stattdessen mehrere dieser Einsätze 21, insbesondere jedoch alle entlang einer Längsseite des Lichtleitelements 10 angeordneten Einsätze zu einem gemeinsamen Reflektorbauteil 20 zusammengefasst sind. Dieses wird dann an den Randbereich des Lichtleitelements 10 angesetzt, derart, dass die Reflektoreinsätze 21 komplementär in die Freiräume 15 zwischen den Lichteinkoppelstrukturen 13 eingreifen und sich hierdurch die in den Figuren erkennbare Anordnung ergibt. Dabei ist vorzugsweise ferner vorgesehen, dass dieses Reflektorbauteil 20 gleichzeitig auch der Lagerung bzw. Halterung der LED-Platine(n) 30 gilt, sodass gewährleistet ist, dass alle LEDs 31a, 31b in definierter Weise auf das Lichtleitelement 10 bzw. die Reflektoreinsätze 21 ausgerichtet sind.

Wie bereits erwähnt, erfolgt die eigentliche direkte Lichtabgabe der Leuchte 100 nicht über das Lichtleitelement 10, sondern über die in einem geringfügigen Abstand davor angeordnete lichtdurchlässige Abdeckung 30. Diese wird über einen umlaufenden Rahmen der Leuchte 100 gehalten und weist vorzugsweise eine Abmessung auf, die der Abmessung des Lichtleitelements 10 inklusive der seitlich vorstehenden Lichteinkoppelstrukturen 13 entspricht. Hierdurch wird eine sogenannte rahmenlose Leuchte 100 realisiert, da letztendlich eine Lichtabgabe bis in den Randbereich der Abdeckung 30 hin erfolgen soll.

Auf der anderen Seite sollten von der Unterseite her die LEDs 31a, 31b nicht als einzelne Lichtquellen erkennbar sein, weshalb entsprechend der Darstellung der Figuren vorzugweise unterhalb der LEDs 31a, 31b sowie der Lichteinkoppelstrukturen 13 und Reflektoreinsätze 21 ein Kaschierelement 25 vorgesehen ist, welches lichtundurchlässig ist und demensprechend einen direkten Blick auf die LEDs 31a, 31b verhindert. Dieses Kaschierelement 25 erstreckt sich von dem Randbereich des Lichtleitelements 10 nach innen, sodass im Bereich der Lichteinkoppelstrukturen 13 sowie in dem sich unmittelbar daran anschließenden Bereich des Lichtleitelements 10 noch keine Auskopplung zur Unterseite hin erfolgen kann. Dies ist insofern auch von Vorteil, als zunächst das Licht zumindest teilweise mittels mehrere Reflexionen an den entsprechenden Flächen des Lichtleitelements 10 weitergeleitet und damit vermischt wird, sodass insgesamt gesehen eine homogene Lichtabgabe erfolgen kann.

Da andererseits wie bereits erwähnt gewünscht ist, dass die Lichtabgabe über die Abdeckung 30 bis in den Randbereich der Leuchte 100 hin erfolgt, ist das Kaschierelement 25 wie insbesondere in Figur 3 erkennbar etwa keilartig bzw. sich in Abstrahlrichtung hin divergierend ausgeführt, sodass es sich in Richtung der Abdeckung 30 bis zu deren Außenumfang hin erstreckt. Licht, welches an der Lichtaustrittsseite 11 des Lichtleitelements 10 dieses verlässt, kann somit über den sich nach unten erweiternden Hohlraum bis in den Randbereich der Abdeckung 30 gelangen und hier abgegeben werden, sodass eine insgesamt großflächige Lichtabgabe erzielt wird.

Auch das Kaschierelement 25 ist vorzugsweise einstückiger Bestandteil des bereits erwähnten Reflektorteils 20, sodass die für die Lichterzeugung und Lichtabgabe verantwortlichen Komponenten der Leuchte 100 aus verhältnismäßig wenigen Einzelbauteilen bestehen. Dies führt insgesamt gesehen zu einem verhältnismäßig einfachen und kostengünstigen Aufbau der Leuchte 100.

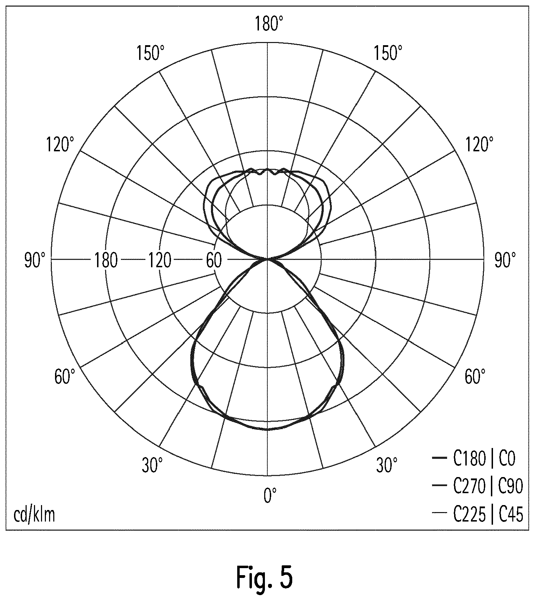

Insgesamt kann somit mithilfe der Leuchte gemäß der vorliegenden Erfindung eine Lichtabgabe erzielt werden, wie sie schematisch in der Lichtverteilungskurve gemäß Figur 5 dargestellt ist. Nach wie vor ist vorgesehen, dass ein Großteil des Lichts zur Unterseite hin abgegeben wird, wobei ein weiterer Anteil nach oben für eine indirekte Lichtabgabe genutzt werden kann. Hierbei ist vorzugsweise vorgesehen, dass zumindest die Möglichkeit besteht, die Intensität beider LED-Gruppen getrennt voneinander einzustellen. Das heißt, das Verhältnis zwischen Direktbeleuchtung und Indirektbeleuchtung kann in diesem Fall dann entsprechend angepasst werden. Die LEDs müssen hierbei auf den Platinen dann entsprechend verschaltet werden, sodass eine individuelle Ansteuerung ermöglicht ist.

Ist darüber hinausgehend wie oben erwähnt vorgesehen, dass die einzelnen LED-Teilgruppen nochmals LEDs unterschiedlicher Typen umfassen, so besteht vorzugsweise auch für diese jeweils verschiedenen Typen die Möglichkeit, diese separat anzusteuern. In diesem Fall kann dann nicht nur die Intensität eines Lichtanteils eingestellt werden, sondern es besteht darüber hinausgehend auch die Möglichkeit, die Farbe bzw. Farbtemperatur des entsprechenden Lichtanteils wahlweise einzustellen. Selbstverständlich wäre denkbar, dass diese Möglichkeit nur für eine der beiden LED-Gruppen besteht, wobei die größtmögliche Flexibilität selbstverständlich dann vorliegt, wenn beide LED-Gruppen entsprechende Ansteuermöglichkeiten bieten.

Insgesamt wird somit eine Leuchte geschaffen, die zur flächigen Lichtabgabe genutzt werden kann und in flexibler Weise die Möglichkeit eröffnet, die direkte Lichtabgabe als auch zusätzlich die indirekte Lichtabgabe entsprechend zu modifizieren. Die Leuchte zeichnet sich darüber hinaus auch durch ihre äußerst kompakte, insbesondere in ihrer Höhe reduzierte Bauweise aus. Das Lichtleitelement selbst kann beispielsweise eine Dicke von 2 mm aufweisen, was dazu führt, dass die Leuchte insgesamt eine Höhe von lediglich 10 bis 20 mm aufweist.

## Patentansprüche

1. Leuchte (100), aufweisend:
• ein plattenförmiges Lichtleitelement (10), welches dazu ausgebildet ist, Licht, welches über eine Seite des Lichtleitelements (10) in dieses eingekoppelt wird, über eine im Wesentlichen senkrecht zur der Lichteinkoppelseite (12) ausgerichtet Flachseite (11) in einer Lichtabstrahlrichtung der Leuchte (100) abzugeben,
• Leuchtmittel, die entlang der Lichteinkoppelseite (12) des Lichtleitelements (10) angeordnet und auf diese ausgerichtet sind,
wobei die Leuchtmittel eine erste und eine zweite Leuchtmittelgruppe (31a, 31b) umfassen, wobei das Licht der ersten Leuchtmittelgruppe (31a) in das Lichtleitelement (10) eingekoppelt und durch dieses in Lichtabstrahlrichtung abgegeben wird, und wobei das Licht der zweiten Leuchtmittelgruppe (31b) mittels optischer Elemente in eine Richtung entgegengesetzt zur Lichtabstrahlrichtung der Leuchte (100) umgelenkt und abgegeben wird,
wobei das Lichtleitelement (10) an seiner Lichteinkoppelseite (12) den Leuchtmitteln der ersten Leuchtmittelgruppe (31a) zugeordnete Lichteinkoppelstrukturen (13) aufweist, wobei die Lichteinkoppelstrukturen (13) durch seitlich vorstehende, linsenartige Vorsprünge gebildet sind,
wobei die Leuchtmittel der beiden Gruppen (31a, 31b) alternierend oder alternierend in Teilgruppen entlang der Lichteinkoppelseite (12) des Lichtleitelements (10) angeordnet sind und
wobei beide Leuchtmittelgruppen (31a, 31b) auf einem gemeinsamen Träger, insbesondere auf einer gemeinsamen Platine (30) angeordnet sind.

2. Leuchte nach Anspruch 1,
**dadurch gekennzeichnet,**
**dass** die beiden Leuchtmittelgruppen (31a, 31b) voneinander unabhängig ansteuerbar sind.

3. Leuchte nach Anspruch 1 oder 2,
**dadurch gekennzeichnet,**
**dass** eine Teilgruppe der Leuchtmittel der beiden Gruppen (31a, 31b) jeweils zwei Einzelleuchtmittel umfasst.

4. Leuchte nach einem der Ansprüche 1 bis 3,
**dadurch gekennzeichnet,**
**dass** in Zwischenräumen (15) zwischen zwei aufeinanderfolgenden Lichteinkoppelstrukturen (13) Reflektoren (21) angeordnet sind, welche das Licht der zweiten Leuchtmittelgruppe (31b) in die Richtung entgegengesetzt zur Lichtabstrahlrichtung der Leuchte (100) umlenken.

5. Leuchte nach Anspruch 4,
**dadurch gekennzeichnet,**
**dass** die Reflektoren (21) zu einer der Lichtabstrahlrichtung entgegengesetzten Richtung geöffnet sind, wobei die Leuchte (100) vorzugsweise eine lichtdurchlässige Abdeckung (32) aufweist, welche die der Lichtabstrahlseite gegenüberliegende Rückseite des Lichtleitelements (10) sowie die Reflektoren (21) überdeckt.

6. Leuchte nach Anspruch 4 oder 5,
**dadurch gekennzeichnet,**
**dass** die Reflektoren (21) zu einem gemeinsamen Reflektorteil (20) zusammengefügt sind, welches an der Lichteinkoppelseite (12) des Lichtleitelements (10) angeordnet ist.

7. Leuchte nach Anspruch 6,
**dadurch gekennzeichnet,**
**dass** das Reflektorteil (20) eine Halterung für beide Leuchtmittelgruppen (31a, 31b) bildet.

8. Leuchte nach einem der vorherigen Ansprüche,
weiterhin aufweisend einen umlaufenden Rahmen, der eine Lichtabstrahlöffnung der Leuchte (100) begrenzt.

9. Leuchte nach Anspruch 8,
**dadurch gekennzeichnet,**
**dass** diese ein Kaschierelement (25) aufweist, welches im Randbereich des Lichtleitelements (10) angeordnet ist und sich in Lichtabstrahlrichtung nach außen divergierend zur der Lichtabstrahlöffnung hin erstreckt.

10. Leuchte nach Anspruch 6 oder 7 sowie nach Anspruch 9,
**dadurch gekennzeichnet,**
**dass** das Kaschierelement (25) Bestandteil des Reflektorteils (20) ist.

11. Leuchte nach einem der vorherigen Ansprüche,
**dadurch gekennzeichnet,**
**dass** zumindest eine Leuchtmittelgruppe (31a, 31b) unterschiedliche Leuchtmittel umfasst, welche Licht unterschiedlicher Farbe oder Farbtemperatur abgeben, wobei die unterschiedlichen Leuchtmittel getrennt ansteuerbar sind.

## Claims

1. Luminaire (100), comprising:
• a planar light guide element (10) which is designed to output light, which is coupled into the light guide element (10) via one side thereof, via a flat side (11) which is oriented substantially perpendicularly to the light in-coupling side (12) in a light emission direction of the luminaire (100),
• lighting means which are arranged along the light in-coupling side (12) of the light guide element (10) and aligned thereon,
wherein the lighting means comprise a first and a second lighting means group (31a, 31b), wherein the light of the first lighting means group (31a) is coupled into the light guide element (10) and is output thereby in the light emission direction, and wherein the light of the second lighting means group (31b) is deflected and output by means of optical elements in a direction opposite to the light emission direction of the luminaire (100),
wherein the light guide element (10) has, on its light in-coupling side (12), light in-coupling structures (13) which are associated with the lighting means of the first lighting means group (31a), the light in-coupling structures (13) being formed by laterally protruding, lens-like projections,
wherein the lighting means of the two groups (31a, 31b) are arranged alternately or alternately in sub-groups along the light in-coupling side (12) of the light guide element (10), and
wherein both lighting means groups (31a, 31b) are arranged on a common carrier, in particular on a common printed circuit board (30).

2. Luminaire according to claim 1,
**characterized in that**
the two lighting means groups (31a, 31b) can be controlled independently of one another.

3. Luminaire according to claim 1 or 2,
**characterized in that**
a sub-group of the lighting means of the two groups (31a, 31b) in each case comprises two individual lighting means.

4. Luminaire according to any one of claims 1 to 3,
**characterized in that**
reflectors (21) are arranged in gaps (15) between two successive light in-coupling structures (13), which reflectors deflect the light of the second lighting means group (31b) in the direction opposite to the light emission direction of the luminaire (100).

5. Luminaire according to claim 4,
**characterized in that**
the reflectors (21) are open in a direction opposite to the light emission direction, the luminaire (100) preferably having a light-transmissive cover (32) which covers the rear side of the light guide element (10) opposite the light emission side, and the reflectors (21).

6. Luminaire according to claim 4 or 5,
**characterized in that**
the reflectors (21) are joined together to form a common reflector part (20) which is arranged on the light in-coupling side (12) of the light guide element (10).

7. Luminaire according to claim 6,
**characterized in that**
the reflector part (20) forms a holder for both lighting means groups (31a, 31b).

8. Luminaire according to any one of the preceding claims,
further comprising a circumferential frame which delimits a light emission opening of the luminaire (100).

9. Luminiare according to claim 8,
**characterized in that**
it comprises a laminating element (25) which is arranged in the edge region of the light guide element (10) and extends in the light emission direction so as to diverge outwardly towards the light emission opening.

10. Luminaire according to claim 6 or 7 and according to claim 9,
**characterized in that**
the laminating element (25) is a component of the reflector part (20).

11. Luminaire according to any one of the preceding claims,
**characterized in that**
at least one lighting means group (31a, 31b) comprises different lighting means which emit light of different colors or color temperature, wherein the different lighting means can be controlled separately.

## Revendications

1. Luminaire (100), présentant :
• un élément de guidage de lumière (10) en forme de plaque qui est conçu pour émettre de la lumière, couplée dans celui-ci sur un côté de l'élément de guidage de lumière (10), par l'intermédiaire d'un côté plat (11) orienté sensiblement perpendiculairement au côté de couplage de lumière (12) dans une direction d'émission de lumière du luminaire (100),
• des moyens lumineux disposés le long du côté de couplage de lumière (12) de l'élément de guidage de lumière (10) et alignés avec celui-ci,
dans lequel les moyens lumineux comprennent un premier et un second groupe de moyens lumineux (31a, 31b), dans lequel la lumière du premier groupe de moyens lumineux (31a) est couplée dans l'élément de guidage de lumière (10) et émise par celui-ci dans la direction d'émission de lumière, et dans lequel la lumière du second groupe de moyens lumineux (31b) est déviée et émise au moyen d'éléments optiques dans une direction opposée à la direction d'émission de lumière du luminaire (100),
dans lequel l'élément de guidage de lumière (10) présente, sur son côté de couplage de lumière (12), des structures de couplage de lumière (13) associées aux moyens lumineux du premier groupe de moyens lumineux (31a), dans lequel les structures de couplage de lumière (13) sont formées par des saillies lenticulaires faisant saillie latéralement,
dans lequel les moyens lumineux des deux groupes (31a, 31b) sont disposés en alternance ou en alternance en sous-groupes le long du côté de couplage de lumière (12) de l'élément de guidage de lumière (10) et
dans lequel les deux groupes de moyens lumineux (31a, 31b) sont disposés sur un support commun, en particulier sur une platine commune (30).

2. Luminaire selon la revendication 1,
**caractérisé en ce**
**que** les deux groupes de moyens lumineux (31a, 31b) peuvent être commandés indépendamment l'un de l'autre.

3. Luminaire selon la revendication 1 ou 2,
**caractérisé en ce**
**qu'**un sous-groupe des moyens lumineux des deux groupes (31a, 31b) comprend respectivement deux moyens lumineux individuels.

4. Luminaire selon l'une des revendications 1 à 3,
**caractérisé en ce**
**que** des réflecteurs (21) sont disposés dans des espaces intermédiaires (15) entre deux structures de couplage de lumière (13) successives, lesquels réflecteurs dévient la lumière du second groupe de moyens lumineux (31b) dans la direction opposée à la direction d'émission de lumière du luminaire (100).

5. Luminaire selon la revendication 4,
**caractérisé en ce**
**que** les réflecteurs (21) sont ouverts dans une direction opposée à la direction d'émission de lumière, dans lequel le luminaire (100) présente de préférence un couvercle transparent (32) qui recouvre le côté arrière de l'élément de guidage de lumière (10) opposé au côté d'émission de lumière ainsi que les réflecteurs (21).

6. Luminaire selon la revendication 4 ou 5,
**caractérisé en ce**
**que** les réflecteurs (21) sont assemblés en une partie réfléchissante (20) commune qui est disposée sur le côté de couplage de lumière (12) de l'élément de guidage de lumière (10).

7. Luminaire selon la revendication 6,
**caractérisé en ce**
**que** la partie réfléchissante (20) forme un dispositif de maintien pour les deux groupes de moyens lumineux (31a, 31b).

8. Luminaire selon l'une quelconque des revendications précédentes,
présentant en outre un cadre périphérique qui délimite une ouverture d'émission de lumière du luminaire (100).

9. Luminaire selon la revendication 8,
**caractérisé en ce**
**que** celui-ci présente un élément de dissimulation (25) qui est disposé dans la zone de bord de l'élément de guidage de lumière (10) et qui s'étend vers l'ouverture d'émission de lumière en divergeant vers l'extérieur dans la direction d'émission de lumière.

10. Luminaire selon la revendication 6 ou 7 ainsi que selon la revendication 9,
**caractérisé en ce**
**que** l'élément de dissimulation (25) fait partie de la partie réfléchissante (20).

11. Luminaire selon l'une quelconque des revendications précédentes,
**caractérisé en ce**
**qu'**au moins un groupe de moyens lumineux (31a, 31b) comprend différents moyens lumineux qui émettent des lumières de couleurs ou de températures de couleur différentes, dans lequel les différents moyens lumineux peuvent être commandés séparément.
